# EUROPÄISCHE PATENTSCHRIFT

(11) **EP 1 157 924 B1**
(45) Veröffentlichungstag und Bekanntmachung des Hinweises auf die Patenterteilung: **19.10.2005**
(21) Anmeldenummer: 01111908.8
(22) Anmeldetag: 17.05.2001
(51) Int. Cl.: B64C 27/615, B64C 27/68

(54) **Hubschrauber - Rotorblattklappestellantrieb**
Helicopter rotor blade flap actuator
Actionneur pour volet de pale de rotor d'hélicoptère

(30) Priorität: 25.05.2000 DE 10026018
(43) Veröffentlichungstag der Anmeldung: 28.11.2001
(73) Patentinhaber: EADS Deutschland GmbH, 81663 München (DE)
(72) Erfinder: Jänker, Peter, Dr., 85748 Garching (DE)

(56) Entgegenhaltungen:
- DE-C- 909 300
- GB-A- 148 515
- US-A- 5 086 541

## Beschreibung

Die Erfindung betrifft ein Kipp- bzw. Schwenkpositionierungsmittel, insbesondere für die Positionierung einer Servoklappe in einem Rotorblatt, mit einem Kippelement und einem Gegenlagerelement, bei welchem das Kippelement schwenkbar an dem Gegenlagerelement gelagert ist.

Kipp- bzw. Schwenkpositionierungsmittel dienen der räumlichen Positionierung von positionierbaren Bauteilen relativ zu anderen Bauteilen durch Kipp- bzw. Schwenkbewegungen um eine Schwenkachse. Üblicherweise wird zu diesem Zweck das positionierbare Bauteil mit dem anderen Bauteil über ein Kipp- bzw. Schwenkgelenk verbunden. Außerdem werden Antriebs- und/oder Haltemittel benötigt, um die jeweils gewünschte Lage des positionierbaren Bauteils relativ zu dem anderen Bauteil einzustellen.

Bekannte Kipp- bzw. Schwenkpositionierungsmittel sind etwa vorgespannte Kurbelgetriebe mit Gleitlagerung oder Wälzlager. Die Kurbelgetriebe haben jedoch relativ hohe Reibverluste. Außerdem tritt ein Wechsel der Reibkraft im Totpunkt der Bewegung auf (der sog. Stick-Slip), wodurch eine exakte Steuerung des Bewegungsablaufs erschwert wird. Wälzlager sind für einige Anwendungen zu groß und/oder weisen eine zu geringe mechanische Belastbarkeit auf.

Die genannten Nachteile sind insbesondere bei der Verwendung von Kipp- bzw. Schwenkpositionierungsmitteln für die Positionierung einer Servoklappe in einem Rotorblatt für einen Hubschrauber von Bedeutung. Solche Servoklappen würden es erlauben, die Form eines Rotorblattes zu variieren. Hierdurch könnte man beispielsweise den Fluglärm und Vibrationen verringern. Außerdem könnte die Aerodynamik des Rotorblattes verbessert werden. Andererseits wären solche Servoklappen und damit auch ihre Lagerungen hohen mechanischen Belastungen ausgesetzt. Außerdem ist der zur Verfügung stehende Einbauraum relativ klein.

Kipp- bzw. Schwenkpositionierungsmittel für die Positionierung einer Servoklappe in einem Rotorblatt für einen Hubschrauber werden in den US 5,639,215, US 5,387,083 und US 5,409,183 beschrieben. Diese Kipp- bzw. Schwenkpositionierungsmittel weisen die genannten Nachteile auf. Ein Kipp- bzw. Schwenkpositionierungsmittel gemäß dem oberbregriff des Anspruchs 1 ist aus DE-C-909 300 bekannt.

Der Erfindung liegt die Aufgabe zugrunde, ein verbessertes Kipp- bzw. Schwenkpositionierungsmittel zur Verfügung zu stellen.

Die Erfindung löst diese Aufgabe durch den Gegenstand des Anspruchs 1, also durch ein Kipp- bzw. Schwenkpositionierungsmittel, insbesondere für die Positionierung einer Servoklappe in einem Rotorblatt, mit einem Kippelement und einem Gegenlagerelement, bei welchem das Kippelement schwenkbar an dem Gegenlagerelement gelagert ist. Zur Lagerung liegt eine konvexe Abwälzfläche an einer konkaven Abwälzfläche an. Der Radius der konkaven Abwälzfläche größer ist als der Radius der konvexen Abwälzfläche.

An die Stelle von Kurbel- oder Wälzlagern tritt also das Zusammenspiel zweier Abwälzflächen. Auf diese Weise ist die Übertragung hoher Kräfte und eine Konstruktion mit hoher Steifigkeit auch bei kleinem Einbauraum möglich. Die Erfindung erlaubt zudem eine im wesentlichen spielfreie Umsetzung einer Linearbewegung in eine Kipp- bzw. Rotationsbewegung unter geringen Reibverlusten. Ihre Verwendung für die Positionierung einer Servoklappe in einem Rotorblatt für einen Hubschrauber erlaubt eine schnelle, blattindividuelle Steuerung der Aerodynamik mit den Funktionen: Tracking, Vibrationsminderung, Lärmreduktion und Kontrolle des Stalls. Insgesamt kann so die aerodynamische Leistung erhöht werden.

Die Ansprüche 2-14 betreffen vorteilhafte Ausführungsformen der Erfindung.

Die Erfindung wird im folgenden anhand von Ausführungsbeispielen und der beigefügten Zeichnung noch näher erläutert. In der Zeichnung sind:
- FIG. 1: ein Querschnitt durch eine erfindungsgemäße Vorrichtung;
- FIGn.2a-c: Querschnitte durch eine weitere erfindungsgemäße Vorrichtung in drei verschiedenen Einstellungen;
- FIGn.3a-c: Querschnitte durch eine dritte erfindungsgemäße Vorrichtung ebenfalls in drei verschiedenen Einstellungen;
- FIG.4: eine perspektivisches Darstellung des Kippelementes aus einem der Ausführungsbeispiele in den FIGn. 1-3c; und
- FIG.5: eine perspektivische Darstellung des Endes eines Zugelementes mit Druckelement.

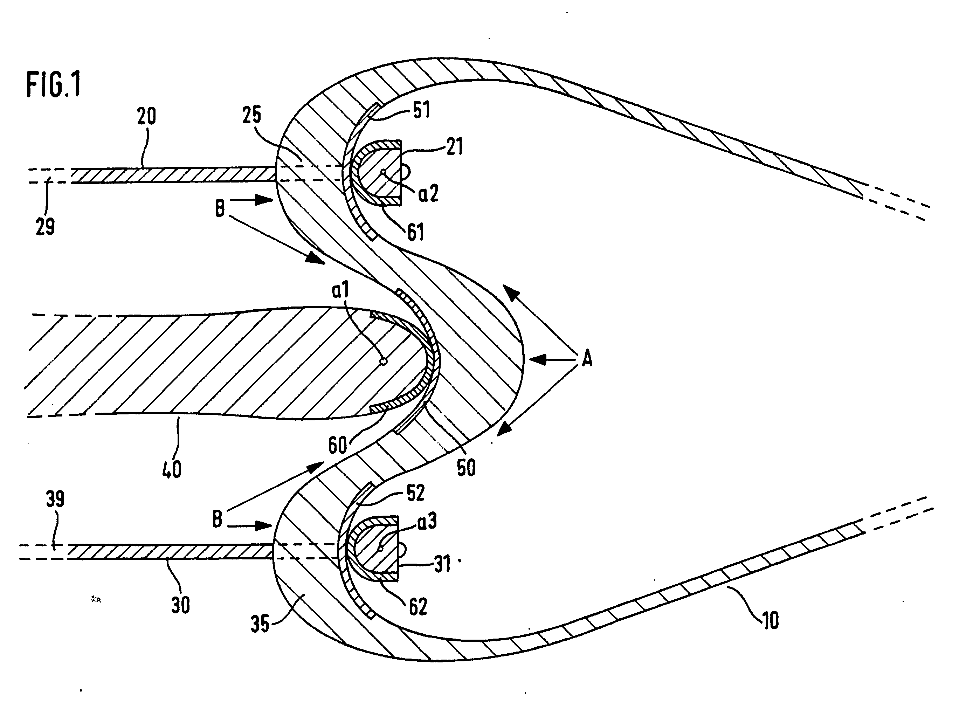

FIG. 1 zeigt, wie gesagt, einen Querschnitt durch ein erfindungsgemäßes Kipp- bzw. Schwenkpositionierungsmittel zur Positionierung eines Kippelementes 10 relativ zu einem Gegenlagerelement 40.

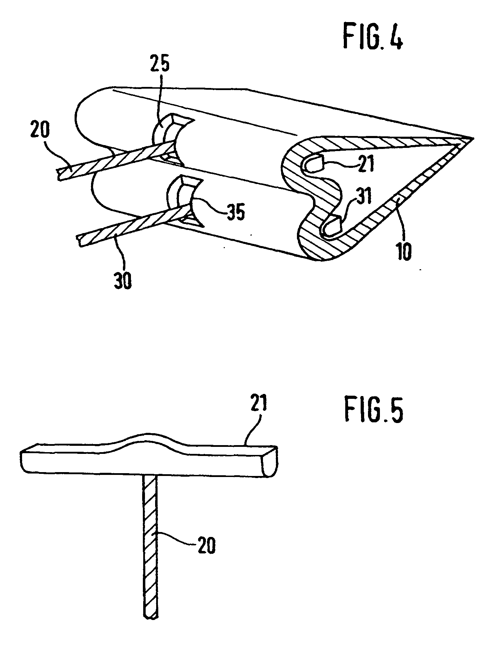

Das Kippelement 10 ähnelt im Querschnitt einer Herzform: auf der einen Seite ist ein nach außen konkaver Abschnitt zwischen zwei nach außen konvexen Abschnitten ausgebildet; auf der anderen Seite läuft das Kippelement 10 spitz zu (nur in FIG. 4 dargestellt). Zur Vereinfachung der Beschreibung ist diese Herzform in allen Figuren einheitlich auf der gleichen Seite liegend dargestellt, so daß die nach außen konvexen und der nach außen konkave Bereich in jeder Figur links und die Spitze rechts sind. Infolgedessen liegen die nach außen konvexen Bereiche (links) übereinander, so daß die Richtungen oben und unten entsprechend definiert sind. Alle entsprechenden Richtungsangaben und Bezeichnungen werden im folgenden ausschließlich aus Gründen der Einfachheit und ohne jede Einschränkung des Erfindungsgegenstandes verwendet. Bei allen zusammenwirkenden konvexen und konkaven Abwälzflächen ist stets auch die kinematische Umkehr möglich, d.h. am jeweiligen Bauteil mit einer beschriebenen konvexen Abwälzfläche kann stattdessen die zugehörige konkave Abwälzfläche ausgebildet sein und umgekehrt. Ebenfalls aus Gründen der Einfachheit wird jedoch jeweils nur eine Ausgestaltung beschrieben.

Der Längsverlauf des Kippelementes 10 ist zylindrisch, d.h. der Querschnitt bleibt im Längsverlauf im wesentlichen gleich. Außerdem ist das Kippelement 10 hohl und hat im Querschnitt unterschiedliche Wandstärken. Insbesondere sind die konvexen und konkaven Bereiche stärker als die übrigen Bereiche ausgebildet, da diese Bereiche stärker belastet werden.

Die äußere Oberfläche im nach außen konkaven Bereich bildet eine äußere konkave Abwälzfläche 50 für eine mittlere konvexe Abwälzfläche 60 des Gegenlagerelementes 40. Der Radius der äußeren konkaven Abwälzfläche 50 ist größer als der der mittleren konvexen Abwälzfläche 60. Die Abwälzflächen 50, 60 können einfach als entsprechend geformte Oberflächenabschnitte ausgebildet sein. Denkbar ist aber auch eine spezielle Beschichtung oder Härtung der Oberflächen in diesen Bereichen. Durch eine erhöhte Härte kann der Verschleiß reduziert werden. Durch eine reibungsarme Ausgestaltung, etwa durch Verchromen, können Reibungsverluste bei eventuell auftretenden Gleitbewegungen reduziert werden.

Das Kippelement 10 und das Gegenlagerelement 40 sind so angeordnet, daß die mittlere konvexe Abwälzfläche 60 des Gegenlagerelementes 40 und die äußere konkave Abwälzfläche 50 des Kippelementes 10 miteinander in Berührung stehen. Das Gegenlagerelement 40 ist dabei im Bereich der mittleren konvexen Abwälzfläche 60 längs der gleichen ersten Achse a 1 wie das Kippelement 10 zylindrisch ausgebildet, so daß die Berührung über die volle Länge der Elemente 10, 40 parallel zu dieser Achse a 1 erfolgt. Auf diese Weise sind im wesentlichen spielfreie Kipp- bzw. Schwenkbewegungen möglich.

Wie oben ausgeführt, ist das Kippelement 10 hohl. Infolgedessen kann zwischen einem äußeren Oberflächenbereich B und einem inneren Oberflächenbereich A unterschieden werden. Die äußere konkave Abwälzfläche 50 ist im äußeren Oberflächenbereich B ausgebildet.

Oberhalb und unterhalb der äußeren konkaven Abwälzfläche 50 sind im Inneren der nach außen gewölbten Abschnitte des herzförmigen Kippelementes 10 (und damit im Inneren Oberflächenbereich A des Kippelementes 10) eine obere und eine untere innere konkave Abwälzfläche 51 und 52 ausgebildet. Die obere innere konkave Abwälzfläche 51 steht mit einer oberen konvexen Abwälzfläche 61 eines oberen Druckelementes 21 in Berührung; die untere innere konkave Abwälzfläche 52 entsprechend mit einer unteren konvexen Abwälzfläche 62 eines unteren Druckelementes 31. Wiederum haben die konkaven Abwälzflächen 51 und 52 einen größeren Radius als die konvexen Abwälzflächen 61 und 62.

Die Druckelemente 21 und 31 sind im Inneren des hohlen Kippelementes 10 angeordnet. Sie sind zudem im Bereich der Abwälzflächen 61 bzw. 62 längs einer zur ersten Achse a 1 des Kippelementes 10 parallelen zweiten bzw. dritten Achse a2 bzw. a3 zylindrisch ausgebildet, so daß die Berührung wiederum über die volle Länge erfolgt.

Die Druckelemente 21 bzw. 31 sind jeweils mit einem oberen bzw. unterem Zugelement 20 bzw. 30 verbunden. Das obere bzw. untere Zugelement 20 bzw. 30 durchsetzt den Mantel des Kippelementes 10 an einer oberen bzw. unteren Durchbruchstelle 25 bzw. 35. Die Durchbruchstellen 25 und 35 sind -wie in FIG.4 genauer dargestellt- als Schlitze ausgebildet, welche von oben nach unten verlaufen und in Längsrichtung größer als der Umfang der Zugelemente 20, 30 sind. Infolgedessen ist es möglich, daß Kippelement 10 zu verkippen, ohne die Zugelemente 20 und 30 gegenüber der Horizontalen zu verkippen oder längs der Vertikalen zu verschieben.

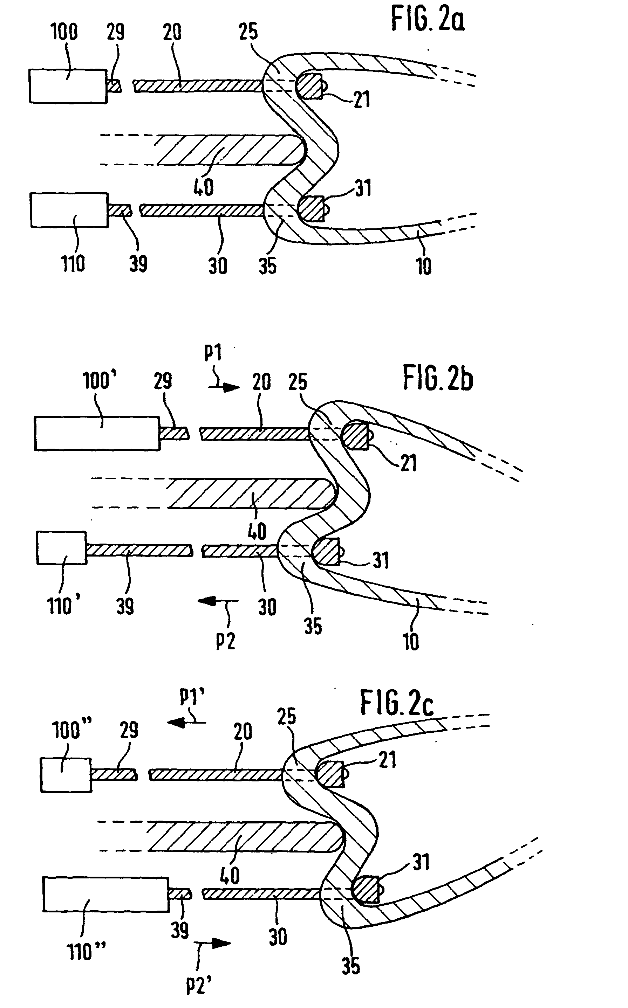

In den FIGn. 2a-2c wird die Betriebsweise eines Ausführungsbeispiels der Erfindung anhand von mehreren Einstellungen eines erfindungsgemäßen Kipp- und Schwenkpositionierungsmittels beschrieben. Dabei sind die äußeren Enden 29 und 39 der Zugelemente 20 und 30 jeweils mit gleichartigen piezoelektrischen Aktuatoren 100 bzw. 110 verbunden.

Piezoelektrische Aktuatoren sind an sich bekannte keramische Elemente, welche ihre Längenausdehnung im wesentlichen proportional zu einer an den Elementen anliegenden elektrischen Spannung verändern. Regelmäßig bestehen solche Aktuatoren aus einer Vielzahl miteinander verbundener piezokeramischer Schichten. Die genutzten Längenänderungen erfolgen in Schichtrichtung, so daß sich die Längenänderungen der einzelnen Schichten addieren. Infolgedessen sind solche piezoelektrischen Aktuatoren gut zum Drücken geeignet sind, während bei Zugbelastungen die Gefahr besteht, daß einzelne Schichten auseinandergerissen werden. Im vorliegenden Fall sollen die Aktuatoren jedoch unter Zugbelastung eingesetzt werden. Hierzu ist es zweckmäßig, piezoelektrische Aktuatoren mit einem Übersetzungsmechanismus und einer Vorspannfeder zu verwenden, wie sie in der DE 197 39 594 A1 beschrieben werden.

In FIG.2a liegt an beiden piezoelektrischen Aktuatoren 100 bzw. 110 die gleiche elektrische Spannung (U₁ = U₂) an, so daß sie gleich lang sind. Das Kippelement 110 befindet sich infolgedessen in einer Mittellage und ist horizontal ausgerichtet. Die Mittellage entspricht der mittleren elektrischen Spannung, die an die Aktuatoren maximal angelegt wird, so daß gilt: U₁ + U₂ = Uₘₐₓ bzw. U₁ = U₂ = Uₘₐₓ/2.

In FIG.2b ist der obere piezoelektrische Aktuator 100' durch eine erhöhte Spannung verlängert, während der untere Aktuator 110' durch eine niedrigere Spannung entsprechend verkürzt ist. Werden die Aktuatoren 100' und 110' ausgehend von dem in FIG.2a dargestellten Zustand entsprechend eingestellt, so werden die Aktuatoren differentiell angesteuert, d.h., die Spannungsänderung am einen Aktuator ΔU₁ hat den gleichen Betrag, aber das umgekehrte Vorzeichen wie die Spannungsänderung ΔU₂ am anderen Aktuator: ΔU₁ = - ΔU₂ (es gilt also weiter, daß die Summe beider Spannungen U₁, U₂ gleich der maximalen Spannung Uₘₐₓ ist, die an einem Aktuator angelegt werden kann: U₁ + U₂ = Uₘₐₓ), Hierdurch wird der untere nach außen konvexe Bereich des herzförmigen Kippelementes 10 nach links gezogen, während zugleich der obere nach außen konvexe Bereich des herzförmigen Kippelementes 10 nach rechts bewegt wird. Infolgedessen wird das Kippelement 10 also nach unten verkippt. Im Ergebnis werden dabei zwei antiparallele lineare Bewegungen in eine Kipp- bzw. Schwenkbewegung übersetzt.

In FIG.2c ist schließlich der untere piezoelektrische Aktuator 100" durch eine erhöhte Spannung verlängert, während der obere Aktuator 110" durch eine niedrigere Spannung entsprechend verkürzt ist. Das Kippelement 10 ist infolgedessen nach oben verkippt. Um von dem in FIG.2a oder FIG.2b dargestellten Zustand in den Zustand aus FIG.2c zu gelangen, wird also der obere nach außen konvexe Bereich des herzförmigen Kippelementes 10 nach links gezogen, während zugleich der untere nach außen konvexe Bereich des herzförmigen Kippelementes 10 nach rechts bewegt wird. Im Ergebnis werden also wiederum zwei antiparallele lineare Bewegungen in eine Kipp- bzw. Schwenkbewegung übersetzt.

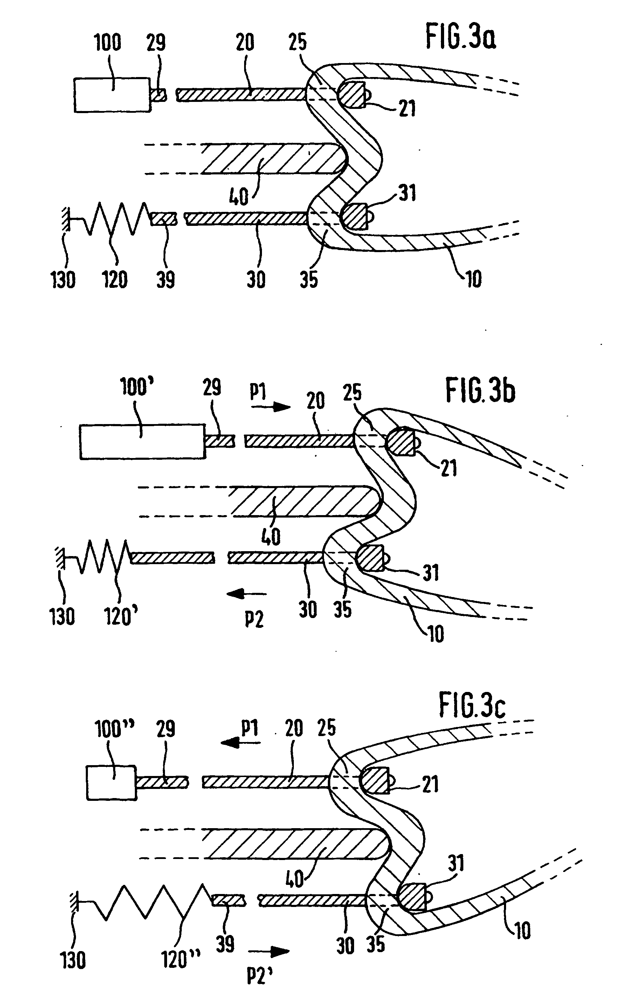

In den FIGn. 3a-3c wird die Betriebsweise eines weiteren Ausführungsbeispiels der Erfindung anhand von mehreren Einstellungen eines solchen Kipp- und Schwenkpositionierungsmittels beschrieben. Dabei ist nur das äußere Ende 29 des oberen Zugelementes 20 mit einem piezoelektrischen Aktuator 100 verbunden. Das äußere Ende 39 des unteren Zugelementes 30 ist hingegen mit einer Zugfeder 120 verbunden, welche an einer Wand oder an einem Rahmen (etc.) 130 befestigt ist.

In FIG.3a liegt am piezoelektrischen Aktuator 100 eine mittlere Spannung an, so daß die Zugfeder 120 und der Aktuator 100 gleichlang sind. Das Kippelement 10 befindet sich infolgedessen in einer Mittellage und ist horizontal ausgerichtet. Zumal es hierbei nur auf die gleiche resultierende Gesamtlänge aus Zugelement 20 bzw. 30 und Aktuator 100 bzw. Zugfeder 20 ankommt, ist es ferner auch möglich, daß die Zugfeder 20 in dieser Stellung eine andere Länge als der Aktuator aufweist, und sich die Zugelemente 20 und 30 entsprechend in der Länge unterscheiden.

In FIG.3b ist der obere piezoelektrische Aktuator 100' durch eine erhöhte Spannung verlängert, während die Zugfeder 120 entsprechend in ihre Ruhestellung zusammengezogen ist. Das Kippelement 10 ist hierdurch nach unten verkippt. Um von dem in FIG.3a dargestellten Zustand in den Zustand aus FIG.3b zu gelangen, wird also der untere nach außen konvexe Bereich des herzförmigen Kippelementes 10 nach links gezogen, während zugleich der obere nach außen konvexe Bereich des herzförmigen Kippelementes 10 nach rechts bewegt wird. Im Ergebnis werden wie oben zwei antiparallele lineare Bewegungen in eine Kipp- bzw. Schwenkbewegung übersetzt.

In FIG.3c ist schließlich der obere piezoelektrische Aktuator 100" durch eine reduzierte Spannung verkürzt, während die Zugfeder 120 entsprechend ausgedehnt ist. Das Kippelement 10 ist infolgedessen nach oben verkippt. Um von dem in FIG.3a oder FIG.3b dargestellten Zustand in den Zustand aus FIG.3c zu gelangen, wird dabei der obere nach außen konvexe Bereich des herzförmigen Kippelementes 10 nach links gezogen, während zugleich der untere nach außen konvexe Bereich des herzförmigen Kippelementes 10 nach rechts bewegt wird. Im Ergebnis werden also auch hier zwei antiparallele lineare Bewegungen in eine Kipp- bzw. Schwenkbewegung übersetzt.

FIG. 4 zeigt eine perspektivische Darstellung eines Kippelementes 10 aus einem der Ausführungsbeispiele in den FIGn.1-3c. In dieser Darstellung ist die Ausgestaltung der oberen und der unteren Durchbruchstelle 25 und 35 besser zu erkennen, durch welche das obere bzw. untere Zugelement 20 bzw. 30 den Mantel des Kippelementes 10 durchsetzt. Die Durchbruchstellen 25 und 35 sind -wie schon gesagt- als Schlitze ausgebildet, welche von oben nach unten verlaufen und in Längsrichtung größer als der Umfang der Zugelemente 20, 30 sind. Infolgedessen ist es möglich, daß Kippelement 10 zu verkippen, ohne die Zugelemente 20 und 30 gegenüber der Horizontalen zu verkippen oder längs der Vertikalen zu verschieben.

FIG.5 zeigt eine perspektivische Darstellung des Endes eines Zugelementes 20 mit einem Druckelement 21. Dabei ist das Druckelement 21 in dem Bereich, in welchem es mit dem Zugelement 20 verbunden ist, wegen der auftretenden größeren Kräfte verstärkt ausgebildet.

Die oben beschriebenen Ausführungsformen dienen nur der beispielhaften Erläuterung des Erfindungsgegenstandes. Sie sind nicht als Einschränkungen zu verstehen. Der Gegenstand der Erfindung umfaßt auch alle weiteren Ausführungsformen und insbesondere die folgenden Alternativen:
- Alternativ zu der in FIG.1 gezeigten Ausführungsform ist es auch möglich, die äußere-Abwälzfläche 50 des Kippelementes 10 konvex und entsprechend die mittlere Abwälzfläche 60 des Gegenlagerelementes 40 konkav auszubilden; das Gleiche gilt für die übrigen Paare von Abwälzflächen.
- Alternativ zu den in FIGn. 2a-2c und 3a-3c gezeigten piezoelektrischen Aktuatoren können auch Stellmotoren verwendet werden. Beispielsweise ist es möglich, an den Zugelementen 20 und 30 jeweils ein Zahnraster anzubringen, in welches mit solchen Stellmotoren gekoppelte Zahnräder greifen, oder aber mit Zugseilen zu arbeiten.

### Bezugszeichenliste

- 10: Kippelement
- 20,30: oberes bzw. unteres Zugelement
- 21,31: oberes bzw. unteres Druckelement
- 25,35: obere bzw. untere Durchbruchstelle
- 29,39: äußere Enden der Zugelemente 20 und 30
- 40: Gegenlagerelement
- 50: äußere konkave Abwälzfläche
- 51,52: obere bzw. untere innere konkave Abwälzfläche
- 60,61,62: mittlere bzw. obere und untere konvexe Abwälzfläche
- 100,110: piezoelektrische Aktuatoren
- 120: Zugfeder
- 130: Wand bzw. Rahmen

- a1,a2,a3: erste, zweite bzw. dritte Achse
- A,B: innerer bzw. äußerer Oberflächenbereich des Kippelementes 10
- P1,p2: Richtungspfeile

## Patentansprüche

1. Kipp- bzw. Schwenkpositionierungsmittel, insbesondere für die Positionierung einer Servoklappe in einem Rotorblatt, mit einem Kippelement (10) und einem Gegenlagerelement (40), bei welchem das Kippelement (10) schwenkbar an dem Gegenlagerelement (40) gelagert ist, **dadurch gekennzeichnet, daß**
a) zur Lagerung eine konvexe Abwälzfläche (60) an einer konkaven Abwälzfläche (50) anliegt; und
b) der Radius der konkaven Abwälzfläche (50) größer ist als der Radius der konvexen Abwälzfläche (60).

2. Kipp- bzw. Schwenkpositionierungsmittel nach Anspruch 1, **dadurch gekennzeichnet, daß** das Kippelement (10) die konkave (50) und das Gegenlagerelement (40) die konvexe Abwälzfläche (60) aufweisen.

3. Kipp- bzw. Schwenkpositionierungsmittel nach Anspruch 1, **dadurch gekennzeichnet, daß** das Kippelement (10) die konvexe und das Gegenlagerelement (40) die konkave Abwälzfläche aufweisen.

4. Kipp- bzw. Schwenkpositionierungsmittel nach einem der vorstehenden Ansprüche, **dadurch gekennzeichnet, daß** das Kippelement (10)
a) mit wenigstens zwei Zugelementen (20, 30) verbunden ist; und
b) über im wesentlichen lineare, zueinander gegenläufige Verschiebungen der Zugelemente (20, 30) relativ zu dem Gegenlagerelement (40) verschwenkbar ist.

5. Kipp- bzw. Schwenkpositionierungsmittel nach einem der vorstehenden Ansprüche, **dadurch gekennzeichnet, daß** an den Zugelementen (20, 30) jeweils ein Druckelement (21, 31) angeordnet ist.

6. Kipp- bzw. Schwenkpositionierungsmittel nach einem der vorstehenden Ansprüche, **dadurch gekennzeichnet, daß** die Druckelemente (21, 31) jeweils schwenkbar an dem Kippelement (10) gelagert sind.

7. Kipp- bzw. Schwenkpositionierungsmittel nach einem der vorstehenden Ansprüche, **dadurch gekennzeichnet, daß**
a) zur schwenkbaren Lagerung der Druckelemente (21, 31) an dem Kippelement (10) jeweils eine konvexe Abwälzfläche (61, 62) an einer konkaven Abwälzfläche (51, 52) anliegt; und
b) der Radius der konkaven Abwälzfläche (51, 52) jeweils größer ist als der Radius der zugehörigen konvexen Abwälzfläche (61, 62).

8. Kipp- bzw. Schwenkpositionierungsmittel nach einem der vorstehenden Ansprüche, **dadurch gekennzeichnet, daß** die Druckelemente (21, 31) jeweils eine konvexe Abwälzfläche (61 bzw. 62) und das Kippelement (10) für jedes Druckelement (21, 31) jeweils eine konkave Abwälzfläche (51 bzw. 52) für die schwenkbare Lagerung der Druckelemente (21, 31) an dem Kippelement (10) aufweisen.

9. Kipp- bzw. Schwenkpositionierungsmittel nach einem der vorstehenden Ansprüche 1 bis 6, **dadurch gekennzeichnet, daß** die Druckelemente (21, 31) jeweils eine konkave Abwälzfläche und das Kippelement (10) für jedes Druckelement (21, 31) jeweils eine konvexe Abwälzfläche für die schwenkbare Lagerung der Druckelemente (21, 31) an dem Kippelement (10) aufweisen.

10. Kipp- bzw. Schwenkpositionierungsmittel nach einem der vorstehenden Ansprüche, **dadurch gekennzeichnet, daß** die konvexen (60, 61, 62) und die jeweils zugehörigen konkaven (50, 51, 52) Abwälzflächen jeweils längs von zueinander parallelen Achsen (a1, a2, a3) zylindrisch ausgebildet sind.

11. Kipp- bzw. Schwenkpositionierungsmittel nach einem der vorstehenden Ansprüche, **dadurch gekennzeichnet, daß** die Abwälzflächen (50, 51, 52; 60, 61, 62) verschleißarm ausgebildet sind.

12. Kipp- bzw. Schwenkpositionierungsmittel nach einem der vorstehenden Ansprüche, **dadurch gekennzeichnet, daß** die Abwälzflächen (50, 51, 52; 60, 61, 62) reibungsarm ausgebildet sind.

13. Kipp- bzw. Schwenkpositionierungsmittel nach einem der vorstehenden Ansprüche, **dadurch gekennzeichnet, daß** die Zugelemente (20, 30) das Kippelement (10) an Durchbruchstellen (25, 35) durchsetzen.

14. Kipp- bzw. Schwenkpositionierungsmittel nach einem der vorstehenden Ansprüche, **dadurch gekennzeichnet, daß** wenigstens eines der Zugelemente (20, 30) an einen Aktuator (100, 110) gekoppelt ist.

15. Kipp- bzw. Schwenkpositionierungsmittel nach einem der vorstehenden Ansprüche, **dadurch gekennzeichnet, daß** die Aktuatoren (100, 110) als piezoelektrische keramische Elemente ausgebildet sind.

## Claims

1. Tilting or swivelling positioning means, in particular for positioning a servo flap in a rotor blade, with a tilting element (10) and a counter-bearing element (40), in which the tilting element (10) is held swivellably on the counter-bearing element (40), **characterised in that**
a) one convex rolling surface (60) rests against one concave rolling surface (50) for holding purposes; and
b) the radius of the concave rolling surface (50) is larger than the radius of the convex rolling surface (60).

2. Tilting or swivelling positioning means according to claim 1, **characterised in that** the tilting element (10) has the concave (50) and the counter-bearing element (40) the convex rolling surface (60).

3. Tilting or swivelling positioning means according to claim 1, **characterised in that** the tilting element (10) has the convex and the counter-bearing element (40) the concave rolling surface.

4. Tilting or swivelling positioning means according to one of the preceding claims, **characterised in that** the tilting element (10)
a) is connected to at least two traction elements (20, 30); and
b) is swivellable relative to the counter-bearing element (40) via substantially linear displacements of the traction elements (20, 30), running in opposite directions to one another.

5. Tilting or swivelling positioning means according to one of the preceding claims, **characterised in that** in each case one push element (21, 31) is arranged on the traction elements (20, 30).

6. Tilting or swivelling positioning means according to one of the preceding claims, **characterised in that** the push elements (21, 31) are in each case held swivellably on the tilting element (10).

7. Tilting or swivelling positioning means according to one of the preceding claims, **characterised in that**
a) in each case one convex rolling surface (61, 62) rests against one concave rolling surface (51, 52) for swivellable holding of the push elements (21, 31) on the tilting element (10) ; and
b) the radius of the concave rolling surface (51, 52) is in each case larger than the radius of the associated convex rolling surface (61, 62).

8. Tilting or swivelling positioning means according to one of the preceding claims, **characterised in that** the push elements (21, 31) have in each case one convex rolling surface (61 or 62) and the tilting element (10) has for each push element (21, 31) in each case one concave rolling surface (51 or 52) for swivellable holding of the push elements (21, 31) on the tilting element (10).

9. Tilting or swivelling positioning means according to one of preceding claims 1 to 6, **characterised in that** the push elements (21, 31) have in each case one concave rolling surface and the tilting element (10) has for each push element (21, 31) in each case one convex rolling surface for swivellable holding of the push elements (21, 31) on the tilting element (10).

10. Tilting or swivelling positioning means according to one of the preceding claims, **characterised in that** the convex (60, 61, 62) and the in each case associated concave (50, 51, 52) rolling surfaces are constructed cylindrically in each case along axes (a1, a2, a3) parallel to one another.

11. Tilting or swivelling positioning means according to one of the preceding claims, **characterised in that** the rolling surfaces (50, 51, 52; 60, 61, 62) are constructed as low-wearing.

12. Tilting or swivelling positioning means according to one of the preceding claims, **characterised in that** the rolling surfaces (50, 51, 52; 60, 61, 62) are constructed as low in friction.

13. Tilting or swivelling positioning means according to one of the preceding claims, **characterised in that** the traction elements (20, 30) pass through the tilting element (10) at opening points (25, 35).

14. Tilting or swivelling positioning means according to one of the preceding claims, **characterised in that** at least one of the traction elements (20, 30) is coupled to an actuator (100, 110).

15. Tilting or swivelling positioning means according to one of the preceding claims, **characterised in that** the actuators (100, 110) are constructed as piezoelectric ceramic elements.

## Revendications

1. Moyen de positionnement par basculement ou pivotement, en particulier pour le positionnement d'un servovolet dans une pale de rotor, comprenant un élément basculant (10) et un élément d'articulation conjugué (40) dans lequel l'élément basculant (10) est monté pivotant contre l'élément d'articulation conjugué (40),
**caractérisé en ce que**
a) pour l'articulation, une surface de roulement convexe (60) est en appui contre une surface de roulement concave (50) ; et
b) le rayon de la surface de roulement concave (50) est plus grand que le rayon que la surface de roulement convexe (60).

2. Moyen de positionnement par basculement ou pivotement selon la revendication 1,
**caractérisé en ce que**
l'élément basculant (10) présente la surface de roulement concave (50) et l'élément d'articulation conjugué (40) présente la surface de roulement convexe (60).

3. Moyen de positionnement par basculement ou pivotement selon la revendication 1,
**caractérisé en ce que**
l'élément basculant (10) présente la surface de roulement convexe et l'élément d'articulation conjugué (40) présente la surface de roulement concave.

4. Moyen de positionnement par basculement ou pivotement selon une des revendications précédentes,
**caractérisé en ce que**
l'élément basculant (10)
a) est relié à au moins deux éléments de traction (20, 30) ; et
b) peut pivoter sous l'effet de translations sensiblement linéaires, en sens inverse l'une de l'autre, des éléments de traction (20, 30) par rapport à l'élément d'articulation conjugué (40).

5. Moyen de positionnement par basculement ou pivotement selon une des revendications précédentes,
**caractérisé en ce qu'**
un élément de pression (21, 31) est attaché à chacun des éléments de traction (20, 30).

6. Moyen de positionnement par basculement ou pivotement selon une des revendications précédentes,
**caractérisé en ce que**
les éléments de pression (21, 31) sont montés pivotants contre l'élément basculant (10).

7. Moyen de positionnement par basculement ou pivotement selon une des revendications précédentes,
**caractérisé en ce que**
a) pour le montage pivotant des éléments de pression (21, 31) contre l'élément basculant (10), une surface de roulement convexe (61, 62) est en appui dans chaque cas contre une surface de roulement concave (51, 52) ; et
b) le rayon de la surface de roulement concave (51, 52) est dans chaque cas plus grand que le rayon de la surface de roulement convexe (61, 62) correspondante.

8. Moyen de positionnement par basculement ou pivotement selon une des revendications précédentes,
**caractérisé en ce que**
les éléments de pression (21, 31) présentent chacun une surface de roulement convexe (61 ou 62 respectivement) et l'élément basculant (10) présente pour chaque élément de pression (21, 31) une surface de roulement concave (51 ou 52 respectivement) pour le montage pivotant des éléments de pression (21, 31) contre l'élément basculant (10).

9. Moyen de positionnement par basculement ou pivotement selon une des revendications précédentes 1 à 6,
**caractérisé en ce que**
les éléments de pression (21, 31) présentent chacun une surface de roulement concave et l'élément basculant (10) présente, pour chaque élément de pression (21, 31), une surface de roulement convexe pour le montage pivotant des éléments de pression (21, 31) contre l'élément basculant (10).

10. Moyen de positionnement par basculement ou pivotement selon une des revendications précédentes,
**caractérisé en ce que**
les surfaces de roulement convexes (60, 61, 62) et les surfaces de roulement concaves (50, 51, 52) qui leur correspondent respectivement sont à chaque fois de forme cylindrique le long d'axes (a1, a2, a3) parallèles entre eux.

11. Moyen de positionnement par basculement ou pivotement selon une des revendications précédentes,
**caractérisé en ce que**
les surfaces de roulement (50, 51, 52 ; 60, 61, 62) sont de type à faible usure.

12. Moyen de positionnement par basculement ou pivotement selon une des revendications précédentes,
**caractérisé en ce que**
les surfaces de roulement (50, 51, 52 ; 60, 61, 62) sont de type à faible frottement.

13. Moyen de positionnement par basculement ou pivotement selon une des revendications précédentes,
**caractérisé en ce que**
les éléments de traction (20, 30) traversent l'élément basculant (10) dans des ouvertures (25, 35).

14. Moyen de positionnement par basculement ou pivotement selon une des revendications précédentes,
**caractérisé en ce qu'**
au moins un des éléments de traction (20, 30) est accouplé à un actionneur (100, 110).

15. Moyen de positionnement par basculement ou pivotement selon une des revendications précédentes,
**caractérisé en ce que**
les actionneurs (100, 100) sont constitués par des éléments céramiques piézoélectriques.
